# EUROPEAN PATENT SPECIFICATION

(11) **EP 0 955 775 B1**
(45) Date of publication and mention of the grant of the patent: **30.01.2008**
(21) Application number: 99303481.8
(22) Date of filing: 04.05.1999
(51) Int. Cl.: H04N 7/00, H04N 5/00, H04L 12/28, H04N 5/445, G06F 9/44, H04L 29/06, G06F 17/30, H04N 7/26

(54) **Method for displaying devices connected to a network**
Verfahren zum Anzeigen der ein Netzwerk angeschlossenen Geräte
Procédé d'affichage de dispositifs connectés à un réseau

(30) Priority: 06.05.1998 KR 9816140
(43) Date of publication of application: 10.11.1999
(60) Divisional application: 06075043.7
(73) Proprietor: SAMSUNG ELECTRONICS CO., LTD., Suwon-City, Kyungki-do (KR)
(72) Inventor: Woo, Sung-gab, Eunpyeong-gu, Seoul (KR)
(74) Representative: Clark, David James

(56) References cited:
- EP-A- 0 812 112
- EP-A- 0 837 599
- WO-A-97/40623
- US-A- 5 524 195
- MARCHISIO L ET AL: "MODELING THE USER INTERFACE" May 1993 (1993-05) , IEEE COMMUNICATIONS MAGAZINE, IEEE SERVICE CENTER. PISCATAWAY, N.J, US, VOL. 31, NR. 5, PAGE(S) 68-74 XP000367621 ISSN: 0163-6804 * the whole document *

## Description

The present invention relates to a method for displaying devices in a network by which a user can see the operations of devices connected to the network through a device among the devices.

Recently, various digital devices such as a digital TV (DTV), a digital VCR (DVCR), and a digital set top box have appeared. The network in which the digital devices are connected to each other, thus performing communication is highlighted (please refer documents such as IEEE 1394-1995 High Performance Serial Bus, IEC 61883).

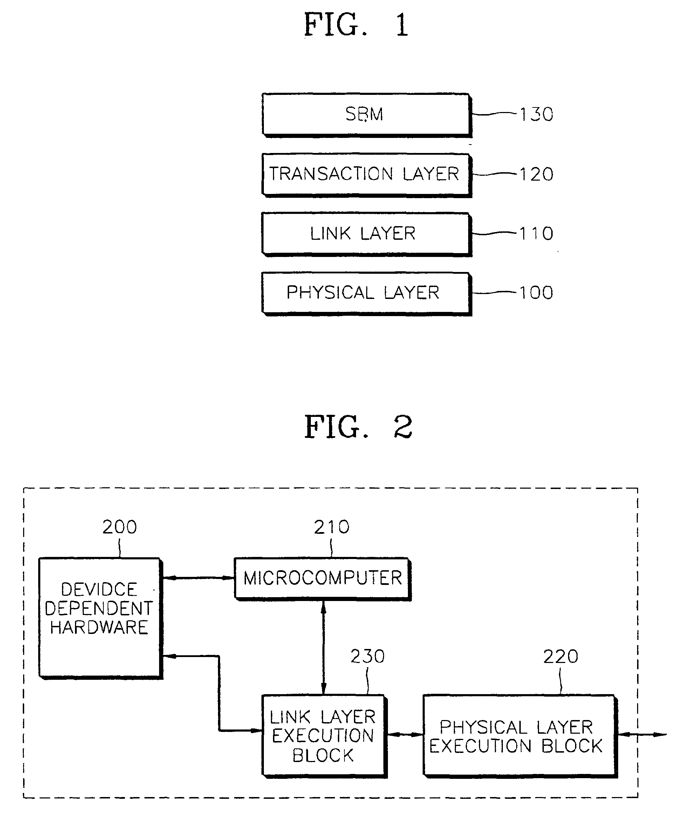

Figure 1 shows a protocol stack of a network device (1394 device). A general protocol stack which the respective devices adopting a network communication function is comprised of a physical layer 100 which is the lowest layer 100, a link layer 110, a transaction layer 120, and a serial bus management layer 130 which is the upper most layer. The physical layer 100 receives a bit column from the link layer 110 during transmission, obtains the right to use a serial bus, encodes the bit column, converts the bit column into an electrical signal, and transfers the signal to an external bus. Reverse processes are performed during reception. The link layer 110 deals with data in units of a packet and has functions of constructing and dismantling a packet, detecting errors, and managing a bus cycle. In general, the physical layer 100 and the link layer 110 are comprised of a chipset. The transaction layer 120 provides a transaction such as reading/writing/locking of data and performs asynchronous communication with different devices (or nodes) put on the network bus using the service provided by the lowest layer. A serial bus management layer 130 holds various material structures such as a configuration ROM and a control and status register (CSR) and manages a connection structure of an entire system connected to a power supply and a bus (topology)/ speed map. The transaction layer 120 and the serial bus management layer 130 are formed of software and is realized by being built-in the microcomputer of the respective devices.

Figure 2 shows a block diagram of a digital device having the network communication function. The digital device is comprised of a device dependent hardware 200, a microcomputer 210, a physical layer execution block 220, and a link layer execution block 230. The device dependent hardware 200 executes a characteristic function of a concerned device. The microcomputer 210 for supporting the network communication executes the operation including the transaction layer and the serial bus management layer, described in Figure 1. The physical layer execution block 220 is hardware for realizing the function of the physical layer 100 of Figure 1. The link layer execution block 230 is hardware for realizing the CIP header inserting/removing functions of IEC 61883.

In a conventional technology, various digital devices are connected to each other on the network as mentioned above and transmits and receives data. However, a user cannot see the operations of all the devices at one sight.

EP 0 837 599 discloses textual and graphical displays provided on a television screen using a hypertext markup language (HTML). On-screen display devices allow a user to invoke hyperlinks to different pages of HTML-coded data in addition to function calls for controlling television and non-television appliance functions. HTML-coded display data is processed to provide a signal suitable for reproduction on a television. The display data may provide information on a featured movie or other presentation of an associated video programming service signal such as a network television broadcast. Function calls allow the control of various television functions and programming options, such as the purchase of pay-perview programming, or television display options such as aspect ration, chanel, brightness, picture-in-picture, or split-screen. Non-television appliances which may be controlled with function calls include audio equipment which is associated with the programming service in addition to, for instance, a home heating and air conditioning system or other household appliances. The invention allows a designer to adapt the vast HTML resources of the Internet for use in the television environment for entertainment, educational or informational purposes.

With a view to solve or reduce the above problem, it is an aim of embodiments of the present invention to provide a method for displaying devices in a network by which a user can see the operations of the devices on the network on a screen of one device and control them.

According to a first aspect of the invention, there is provided a method for displaying the operations of devices on a display screen of a device which operates as a client in a network when various digital devices connected to the network operate as the client or the servers, having the same protocol layer as an Internet protocol stack on the upper network communication layer, comprising the steps of (a) the device which operates as the client requesting devices which operate as the servers to send characteristic information that they have, (b) displaying on the device which operates as the client representative information of the server device which is based on the characteristic information, when the characteristic information in which information representing a concerned device is transmitted from the devices which operate as the servers to the device which operates as the client, (c) the device which operates as the client requesting devices which operate as the servers to send multimedia information during the operations executed by the server devices, and (d) the device which operates as the client receiving each multimedia information from the devices which operate as the servers and displaying the image of the multimedia information in the position of the representative information of the concerned device; the method characterised in that the network is an IEEE 1394 network, that at steps (a) and (c) the device which operates as the client requests the remaining devices connected to the network to send characteristic information they have, and that the step (d) comprises the steps of: the device which operates as the client receiving the image data of the remaining devices which operate as the servers; the device which operates as the client decoding the image data received from the remaining devices which operate as the servers by an AVI format data in order to express the image data as a moving image; and displaying the decoded data in the position of the representative information of the concerned device of the remaining devices on the screen of the device which operates as the client.

The representative information is preferably icon image information by which it is possible to classify the server devices.

Preferably, the step (d) further comprises the steps of the device which operates as the client receiving multimedia data from the selected device which operates as the server and decoding the received signal according to a predetermined method.

For a better understanding of the invention, and to show how embodiments of the same may be carried into effect, reference will now be made, by way of example, to the accompanying diagrammatic drawings, in which:
Figure 1 shows a protocol stack of a network device (1394 device);
Figure 2 shows a block diagram of a digital device having a network communication function;
Figure 3 is an example of the structure of the network for describing embodiments of the present invention;
Figure 4 shows the network protocol stack of Figure 3;
Figure 5 is a flowchart of a method for displaying devices in the network according to embodiments of the present invention;
Figure 6 is a block flowchart showing processes in which information received from server devices is decoded in a digital TV in the description of Figure 5;
Figures 7A through 7E are block diagrams describing various processes in which operation data of the server devices are input to the digital TV and are displayed in Figure 5; and
Figure 8 is another embodiment of the method for displaying devices in the network of the present invention.

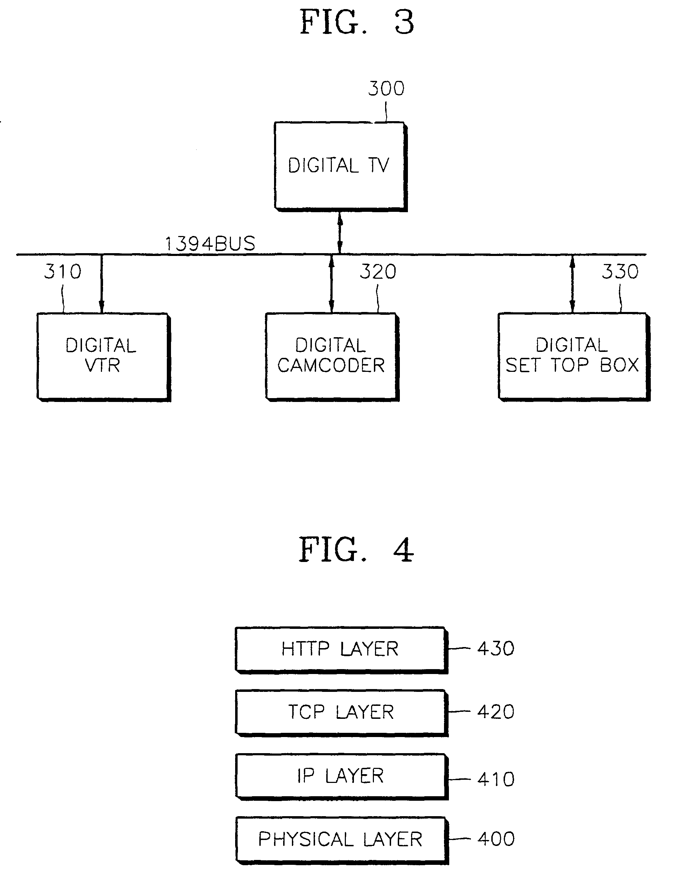

Figure 3 is an example of the structure of a network for describing the present invention. A digital TV 300, a digital VCR 310, a digital camcorder 320, and a digital set top box 330 are connected to a network bus. The respective digital devices 300 through 330 execute data communication according to a client/server method used in a general intranet/Internet, including a protocol layer as shown in Figure 4. Here, the digital TV 300 by which a user can see predetermined image and character data on a screen operates as a client and includes a web browser. The digital devices 310 through 330 play the same role as that of a web server on the Internet. The devices connected to the network bus give and take hypertext documented data as in the Internet. The hypertext document to be transferred by the respective devices include information on the functions and the operations of the respective devices. The digital TV 300 which is the client accesses the respective web sites from the web server devices 310 through 330 using the web browser and controls concerned devices. Namely, a user accesses the web sites of the remaining devices connected to the network using the web browser of the digital TV 300 and controls the characteristic operations of the concerned devices in the respective web sites. The characteristic operations of the respective devices and predetermined device information are included in the web sites provided by the digital devices 300 through 330 connected to the network.

Figure 4 shows the network protocol layer of Figure 3, which is comprised of a network physical layer 400, an IP layer 410, a transmission control protocol (TCP) layer 420, and hypertext transmission protocol (HTTP) layer 430. The network physical layer 400 is a layer for transmitting and receiving data through a network bus. In the IP layer 410, a protocol for connecting independently managed communication networks to each other is adopted in order to use the communication networks together. In the TCP layer 420, a communication net protocol of a system connected through the Internet is adopted. In the HTTP layer 430, a communication protocol used for exchanging the hypertext document in the Internet is adopted.

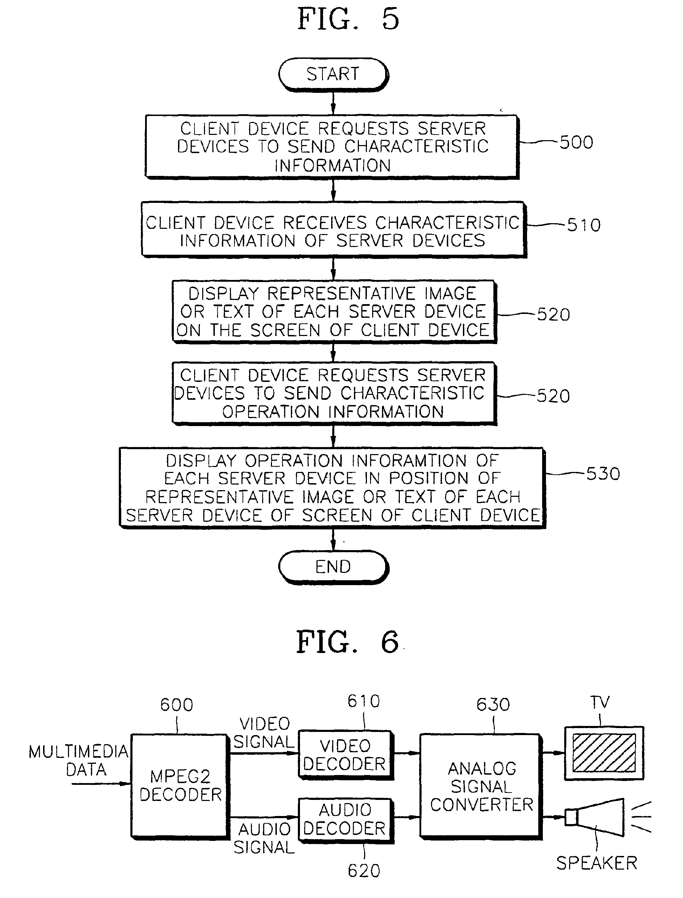

Figure 5 is a flowchart of a method for displaying devices in the network of the present invention, which will be described, taking the system of Figure 3 as an example. First, the digital TV 300 which is the client device requests the digital VCR 310, the digital camcorder 320, and the digital set top box 330, which are server devices, to send predetermined characteristic information that they have (step 500). The above-mentioned server devices accept this request and sends the characteristic information which they have such as kinds of products and manufacture, to the digital TV 300 which is the client (step 510). The pattern of the characteristic information is shown as a picture in which information for classifying products is implied, namely, is representative information (icon information or text information) which represents a concerned device. The digital TV 300 receives characteristic information from the server devices and displays the representative information received from the respective server devices and the representative information thereof at predetermined positions of a screen (step 520). The digital TV 300 requests the server devices 310 through 330 to transfer information during the execution of the respective characteristic operations (such as reproduced screen information during a digital VTR 310 reproducing operation) (step 530). The operation information received from the server devices is multimedia information such as a video signal or an audio signal. The digital TV 300 displays the multimedia information where the representative information of the concerned device is displayed (step 540).

Figure 6 is a block diagram showing processes in which the information received from the server devices is decoded by the digital TV 300 in the explanation of Figure 5. Since data which the digital devices deal with is generally MPEG2 data, processes of decoding the data are executed by an MPEG2 decoder 600. When the multimedia data are input from the server devices, the MPEG2 decoder 600 decodes data and separately extracts the video signal and the audio signal. The video signal and the audio signal extracted by the MPEG2 decoder 600 are respectively input to a video decoder 610 and an audio decoder 620, are decoded, and are converted into analog signals through an analog signal converter 630. The video analog signal is output through the screen of the digital TV 300. The audio analog signal is output through a speaker loaded into the digital TV 300. Accordingly, a user can see the operations of different devices which are connected to each other through the screen of the digital TV 300 or the speaker.

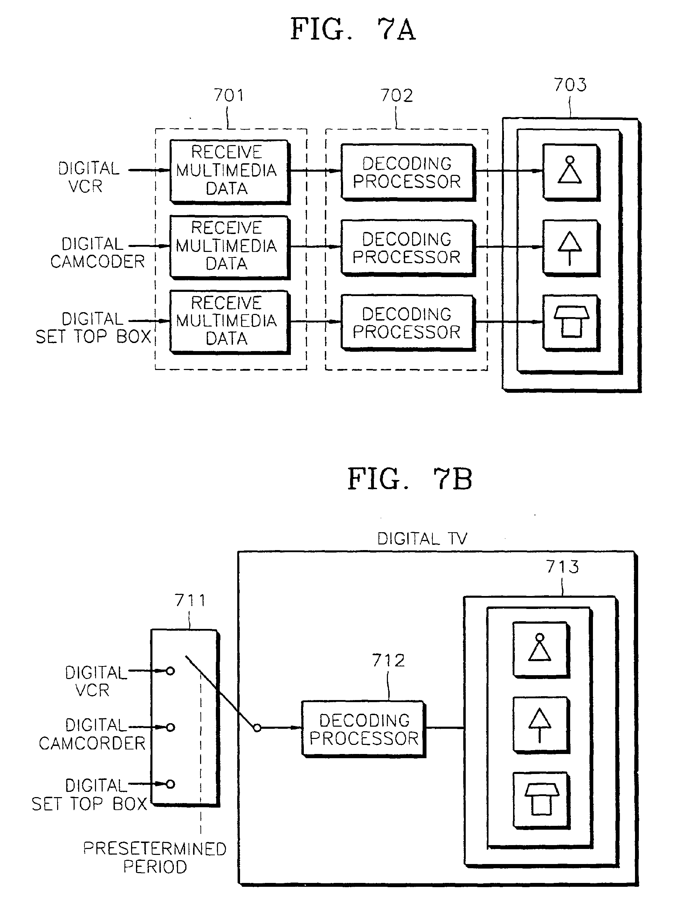

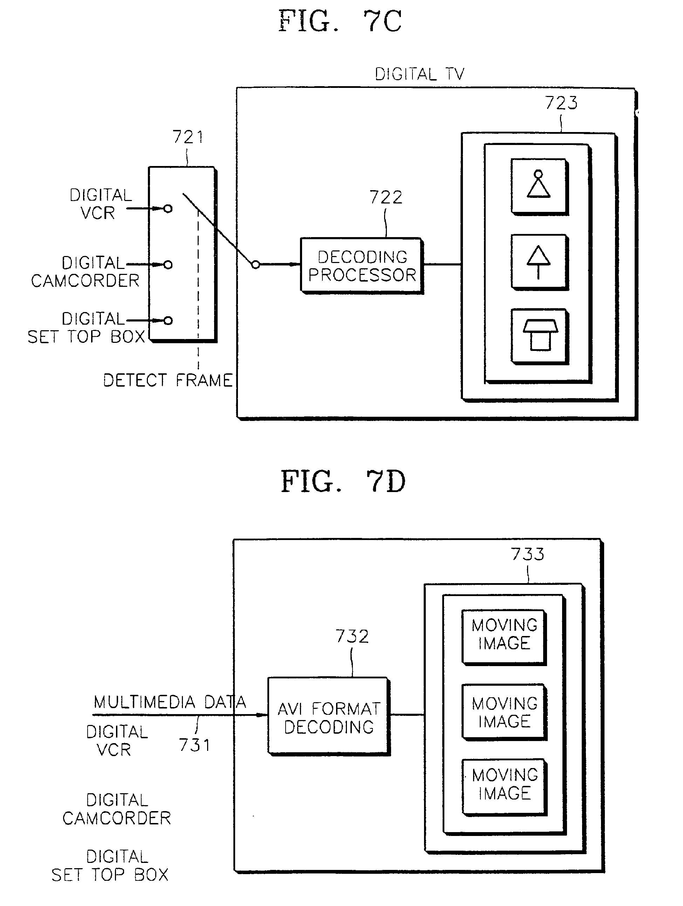

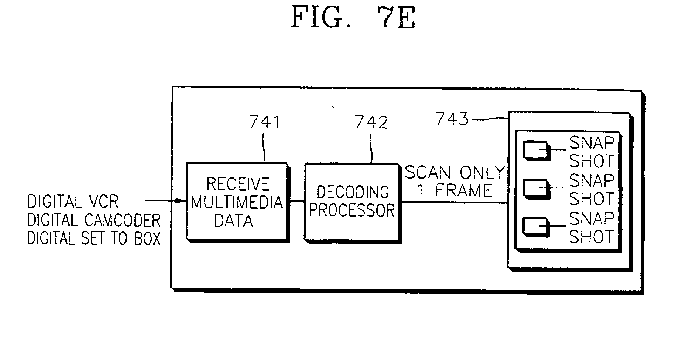

Figures 7A through 7E are block diagrams of various processes in which the operation data of the server devices are input to the digital TV 300 and are displayed in Figure 5. Figure 7A shows, the multimedia data from the server devices received by the digital TV 300 in parallel (step 701). The digital TV 300 decodes the received parallel data through decoding processors as shown in Figure 6 (step 702). The video signal is displayed where the concerned device representative information positioned on the screen of the digital TV 300 (step 703). In the embodiment of Figure 7B, the multimedia data of the server devices are sequentially input to the digital TV 300 in every predetermined period (step 711). The digital TV 300 decodes the data received through one decoding processor as shown in Figure 6 (step 712) and displays the decoded data where the concerned device representative information is positioned on the screen of the digital TV 300 (step 713). In the embodiment of Figure 7C, the multimedia data of the server devices are sequentially input to the digital TV 300 (step 721). The digital TV 300 decodes the received data through one decoding processor (step 722). I frames of the respective devices are sensed and sequentially decoded. For example, I frames among the video signals of the digital VCR 310 is read and decoded. Continuously, I frames among the video signals of the digital camcorder 320 are read and decoded. Also, I frames among the video signals of the digital set top box 330 is read and decoded. The decoded video signal is displayed in the position of the representative image of the concerned device which is displayed on the screen of the digital TV 300 (step 723). Only I frame of the operation screen of each device displayed on the screen of the digital TV 300 is displayed. Accordingly, an image of a snap shot pattern changes in every predetermined period. In Figure 7D, the multimedia data of the server devices are selectively or periodically received by the digital TV 300 (step 731). The digital TV 300 decodes the received data by an audio video interleaved (AVI) format used for expressing the received data as a moving image (step 732). The data decoded by the AVI format is scanned on the screen of the digital TV 300 and is displayed in the position of the representative information of the concerned device. The picture displayed as mentioned above is shown as the moving image to the user. Such a moving image display is commonly used in a general web browser. In Figure 7E, the digital TV 300 receives the multimedia data from the server devices (step 741), decodes the received signal through the decoding processor as shown in Figure 6 (step 742), and displays only one I frame from each decoded device signal in the position of the representative information of the concerned device on the screen of the digital TV 300 (step 743). The picture displayed as mentioned above is shown to the user as a still picture of the snap shot pattern.

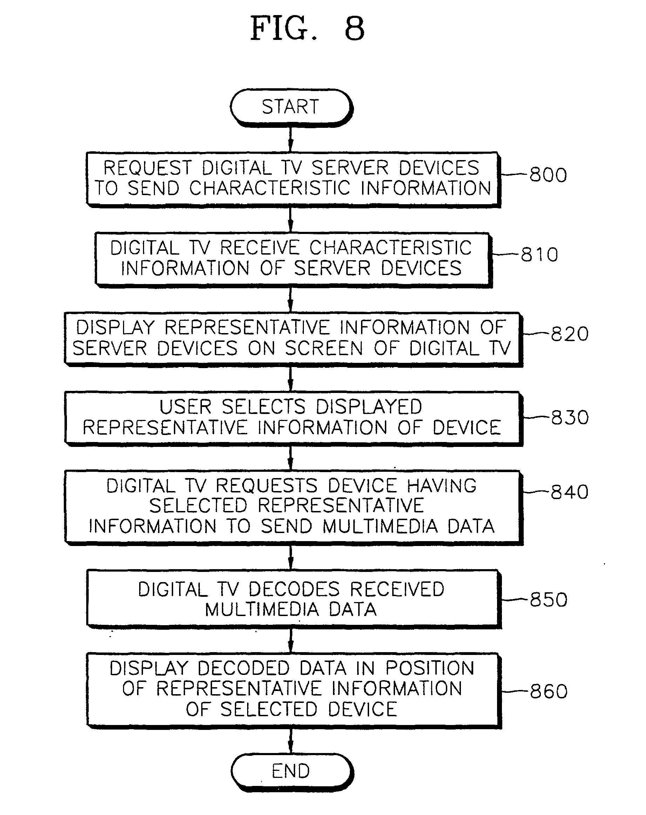

Figure 8 is another embodiment of a method for displaying devices in the network of the present invention, which will be described taking Figure 3 as an example. Descriptions of steps 800 through 820 will be omitted since they are identical to those of the steps 500 to 520 of Figure 5. After the representative information of the respective devices are displayed on the screen of the digital TV 300 (the step 820), the representative information of a predetermined device is selected by the user (step 830). When the user selects the representative information of an icon or a text pattern, the digital TV 300 requests the operation data to the device having selected representative information (step 840). Here, the operation data refer to the multimedia information such as a reproduced image and a sound signal when the digital VCR 310 executes the reproducing operation when the digital VCR 310 is selected. The digital TV 300 receives the multimedia information from the selected device during the concerned operation and decodes the multimedia information according to a predetermined device (step 850). The digital TV 300 displays the decoded signal where the representative information of the concerned server device is positioned on the screen thereof (step 860). In such a process, only when the user selects one device among the server devices displayed on the screen of the digital TV 300, the operation data are received from the selected device and displayed.

Here, the network can perform communication by a client/server method like the IEEE 1394 network. The above-mentioned embodiment of the present invention can be embodied in a program which can be executed in a computer. The embodiment can be realized in a generally used digital computer for operating the program from a medium used in the computer. The medium includes a storage medium such as a magnetic storage medium (FOD and HOD), optical storage medium (CD-ROM and DVD) or a carrier wave (transferred through the Internet).
The recording medium stores a program code which can execute a first step in which the device which operates as the client requests the remaining devices which operate as servers to send characteristic information that they have, a second step in which the representative information of the server devices is displayed on the screen of the device which operates as the client when the representative information in which the information representing a concerned device is implied is transmitted from the devices which operate as servers to the device which operates as the client, a third step in which the device which operates as the client requests the devices which operates as the servers to send the multimedia information during the operations of the server devices, and a fourth step in which the device which operates as the client receives each multimedia information from the devices which operate as the servers and displays the image of the multimedia information where the representative information of the concerned device is positioned, in the network system having the protocol stack of Figure 4. The program is positioned in an upper layer as it prevents more errors of the video data. The upper layer and the lower layer have backward compatibility in which the upper layer includes the lower layer. The program is coded so that more errors are prevented with respect to data which considerably affects picture quality.

A functional program, a code, and a code segment for realizing the present invention can be easily realized by programmers knowledgeable in the art.

According to the present invention, the user can see the operations of the devices on the network on the screen of one device among the devices and can easily control a desired device on the screen.

## Claims

1. A method for displaying the operations of devices on a display screen of a device which operates as a client in a network when various digital devices connected to the network operate as the client or the servers, having the same protocol layer as an Internet protocol stack on the upper network communication layer, comprising the steps of:
a) the device which operates as the client requesting devices which operate as the servers to send characteristic information, such as e.g. information for classifying the device that they have (500);
b) displaying on the device which operates as the client representative information of the server device which is based on the characteristic information, when the characteristic information, in which information representing a concerned device is transmitted from the devices which operate as the servers to the device which operates as the client (510, 520);
c) the device which operates as the client requesting the devices which operate as the servers to send multimedia information during the operations executed by the server devices (520); and
d) the device which operates as the client receiving each multimedia information from the devices which operate as the servers and displaying the image of the multimedia information in the position of the representative information of the concerned device (530); the method
**characterised in that** the network is an IEEE 1394 network, that at steps a) and c) the device which operates as the client requests the remaining devices which operate as the servers connected to the IEEE 1394 network to send characteristic information that they have, and that the step d) comprises the steps of:
the device which operates as the client receiving the image data of the remaining devices which operate as the servers;
the device which operates as the client decoding the image data received from the remaining devices which operate as the servers by an AVI format data in order to express the image data as a moving image; and
displaying the decoded data in the position of the representative information of the concerned device of the remaining devices on the screen of the device which operates as the client.

2. The method of claim 1, wherein the representative information is icon image information by which it is possible to classify the server devices.

3. The method of any preceding claim, wherein the step d) further comprises the steps of the device which operates as the client requesting the selected device to send operation data; and the device which operates as the client receiving multimedia data from the selected device which operates as the server and decoding the received signal according to a predetermined method.

## Patentansprüche

1. Verfahren zum Anzeigen der Operationen von Vorrichtungen auf einem Anzeigebildschirm einer Vorrichtung, die als ein Client in einem Netzwerk arbeitet, wenn verschiedene digitale Vorrichtungen, die mit dem Netzwerk verbunden sind, als der Client oder die Server arbeiten und die gleiche Protokollschicht wie ein Internet-Protokollstapel auf der oberen Netzwerk-Kommunikationsschicht haben, wobei es die folgenden Schritte umfasst:
a) Auffordern von Vorrichtungen, die als die Server arbeiten, charakteristische Informationen, wie beispielsweise Informationen zum Klassifizieren der Vorrichtung die sie haben, zu senden, durch die Vorrichtung, die als der Client arbeitet (500);
b) Anzeigen repräsentativer Informationen der Server-Vorrichtung, die auf den charakteristischen Informationen basiert, an der Vorrichtung, die als der Client arbeitet, wenn die charakteristischen Informationen von den Vorrichtungen, die als die Server arbeiten, zu der Vorrichtung gesendet werden, die als der Client arbeitet, wobei die Informationen eine betroffene Vorrichtung darstellen (510, 520);
c) Auffordern der Vorrichtungen, die als die Server arbeiten, während der durch die Server-Vorrichtungen ausgeführten Operationen Multimediainformationen zu senden, durch die Vorrichtung, die als der Client arbeitet (520); und
d) Empfangen aller Multimediainformationen von den Vorrichtungen, die als die Server arbeiten, und Anzeigen des Bildes der Multimediainformationen an der Position der repräsentativen Informationen der betreffenden Vorrichtung durch die Vorrichtung, die als der Client arbeitet, wobei das Verfahren **dadurch gekennzeichnet ist, dass** das Netzwerk ein IEEE-1394-Netzwerk ist, dass in Schritten a) und c) die Vorrichtung, die als der Client arbeitet, die verbleibenden Vorrichtungen, die als die Server arbeiten und mit dem IEEE-1394-Netzwerk verbunden sind, auffordert, charakteristische Informationen zu senden, über die sie verfügen, und dass der Schritt d) die folgenden Schritte umfasst:
Empfangen der Bilddaten der verbleibenden Vorrichtungen, die als die Server arbeiten, durch die Vorrichtung, die als der Client arbeitet;
Decodieren der von den verbleibenden Vorrichtungen, die als die Server arbeiten, empfangenen Bilddaten mittels Daten im AVI-Format durch die Vorrichtung, die als der Client arbeitet, um die Bilddaten als ein Bewegtbild auszudrücken; und
Anzeigen der decodierten Daten an der Position der repräsentativen Informationen der betreffenden Vorrichtung der verbleibenden Vorrichtungen auf dem Bildschirm der Vorrichtung, die als der Client arbeitet.

2. Verfahren nach Anspruch 1, wobei die repräsentativen Informationen Icon-Bildinformationen sind, mit denen es möglich ist, die Server-Vorrichtungen zu klassifizieren.

3. Verfahren nach einem der vorangehenden Ansprüche, wobei der Schritt d) des Weiteren die Schritte des Aufforderns der ausgewählten Vorrichtung, Operationsdaten zu senden, durch die Vorrichtung, die als der Client arbeitet, und des Empfangens von Multimediadaten von der ausgewählten Vorrichtung, die als der Server arbeitet, und Decodieren des empfangenen Signals entsprechend einem vorgegebenen Verfahren durch die Vorrichtung, die als der Client arbeitet, umfasst.

## Revendications

1. Procédé pour afficher les fonctionnements de dispositifs sur un écran d'affichage d'un dispositif qui fonctionne comme un client dans un réseau lorsque divers dispositifs numériques connectés au réseau fonctionnent en tant que client ou en tant que serveurs, ayant la même couche protocole qu'une pile de protocole Internet sur la couche de communication réseau supérieure, comportant les étapes dans lesquelles :
a) le dispositif qui fonctionne comme le client demande à des dispositifs qui fonctionnent comme serveurs d'envoyer des informations caractéristiques, telles que par exemple des informations pour classer le dispositif qu'ils ont (500),
b) a lieu l'affichage sur le dispositif qui fonctionne comme client d'informations représentatives du dispositif serveur qui est basé sur les informations caractéristiques, lorsque les informations caractéristiques, dans lesquelles des informations représentant un dispositif concerné sont transmises par les dispositifs qui fonctionnent comme serveurs au dispositif qui fonctionne comme client (510, 520),
c) le dispositif qui fonctionne comme client demande aux dispositifs qui fonctionnent comme serveurs d'envoyer des informations multimédia durant les opérations exécutées par les dispositifs serveurs (520), et
d) le dispositif qui fonctionne comme client reçoit chaque information multimédia depuis les dispositifs qui fonctionnent comme serveurs et affiche l'image des informations multimédia dans la position des informations représentatives du dispositif concerné (530), le procédé étant **caractérisé en ce que** le réseau est un réseau IEEE 1394, **en ce que** dans les étapes a) et c) le dispositif qui fonctionne comme client demande aux dispositifs restants qui fonctionnent comme serveurs connectés au réseau d'envoyer des informations caractéristiques qu'ils ont, et **en ce que** l'étape d) comporte les étapes dans lesquelles :
le dispositif qui fonctionne comme le client reçoit les données d'image des dispositifs restants qui fonctionnent comme les serveurs,
le dispositif qui fonctionne comme le client décode les données d'image reçues des dispositifs restants qui fonctionnent comme les serveurs en données de format AVI afin d'exprimer les données d'image comme une image animée, et
a lieu l'affichage des données décodées dans la position des informations représentatives du dispositif concerné des dispositifs restants sur l'écran du dispositif qui fonctionne comme le client.

2. Procédé selon la revendication 1, dans lequel les informations représentatives sont des informations d'image d'icône par lesquelles il est possible de classer les dispositifs serveurs.

3. Procédé selon l'une quelconque des revendications précédentes, dans lequel l'étape d) comporte de plus les étapes dans lesquelles le dispositif qui fonctionne comme le client demande au dispositif sélectionné d'envoyer des données d'opération, et le dispositif qui fonctionne comme le client reçoit des données multimédia depuis le dispositif sélectionné qui fonctionne comme le serveur et décode le signal reçu conformément à un procédé prédéterminé.
